(19) Europäisches Patentamt
European Patent Office
Office européen des brevets

(11) EP 4 726 517 A1

(12) EUROPEAN PATENT APPLICATION
published in accordance with Art. 153(4) EPC

(43) Date of publication:
15.04.2026 Bulletin 2026/16

(51) International Patent Classification (IPC):
G06F 3/04842 (2022.01)     G06F 3/04817 (2022.01)
G06F 3/041 (2006.01)     G06F 3/0488 (2022.01)

(21) Application number: 24843292.4

(52) Cooperative Patent Classification (CPC):
G06F 3/041; G06F 3/04817; G06F 3/04842;
G06F 3/0488

(22) Date of filing: 29.05.2024

(86) International application number:
PCT/KR2024/007314

(87) International publication number:
WO 2025/018571 (23.01.2025 Gazette 2025/04)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 20.07.2023  KR 20230094860
31.08.2023  KR 20230115285

(71) Applicant: Samsung Electronics Co., Ltd.
Suwon-si, Gyeonggi-do 16677 (KR)

(72) Inventors:
• YOO, Hyunwoo
Suwon-si Gyeonggi-do 16677 (KR)
• KIM, Wankyu
Suwon-si Gyeonggi-do 16677 (KR)
• OH, Boa
Suwon-si Gyeonggi-do 16677 (KR)
• SHIN, Jongwoo
Suwon-si Gyeonggi-do 16677 (KR)
• YIM, Soeyoun
Suwon-si Gyeonggi-do 16677 (KR)
• CHOI, Jungwoo
Suwon-si Gyeonggi-do 16677 (KR)

(74) Representative: Gulde & Partner
Patent- und Rechtsanwaltskanzlei mbB
Berliner Freiheit 2
10785 Berlin (DE)

(54) ELECTRONIC DEVICE AND METHOD FOR TURNING OF WIDGET PAGE

(57) An electronic device is provided. The electronic device may move a widget object according to the movement of a pointing point formed on a cover display, and determine the number of page turns on the basis of the moving distance of the pointing point, the moving speed of the pointing point, and the length along one direction of the widget object at a time when the pointing point is released after being moved. The electronic device may output a widget object of a target widget page by sequentially turning widget pages by the number of page turns.

Start

Move widget object as pointing point formed on cover display moves — 510

Determine page turning number based on moving distance of pointing point, moving velocity of pointing point, and length in one direction of cover display at time point when pointing point is moved and then is released — 520

Output a widget object of the target widget page by sequentially turning widget pages by the page turning number determined subsequently to the release of the pointing point — 530

End

FIG. 5

## Description

### TECHNICAL FIELD

The following disclosure relates to changing a widget page.

### BACKGROUND ART

With the development of display technology, various display devices, such as a flexible display device or a transparent display device, have been developed. The flexible display device may be used folded or unfolded depending on usage of a user, thereby significantly reducing the volume of an electronic device.

The flexible display device may be implemented as an organic light-emitting diode (OLED) display device or a liquid crystal display (LCD) device. For example, in a conventional LCD or OLED display device, a flexible display device may be manufactured using a flexible material, for example, replacing an organic substrate with a plastic film. In addition, in the conventional LCD or OLED display device, the foldable display device may be manufactured using a flexible material at least in a folded portion.

As the flexible display devices are used, various application fields have emerged. For example, the flexible display device may apply to electronic books that may replace publications, such as a magazine, a textbook, a book, and a comic book, and new portable information technology (IT) products, such as an ultra-small portable personal computer (PC) of which a display is folded or rolled, or a smart card for viewing information in real time. In this regard, there is demand for developing an interface for utilizing an advantage of the flexible display device while reflecting characteristics of the flexible display device.

### DISCLOSURE OF THE INVENTION

### TECHNICAL SOLUTIONS

An electronic device according to an example embodiment may include a cover display outputting a widget object, a main display, a memory storing computer-executable instructions, and one or more processors accessing the memory and executing the instructions. The instructions may cause the electronic device to move the widget object according to a movement of a pointing point formed on the cover display. The instructions may cause the electronic device to determine a page turning number based on a moving distance of the pointing point at a time point when the pointing point is moved and then is released, a moving velocity of the pointing point, and a length of the widget object in one direction. The instructions may cause the electronic device to output a widget object of a target widget page by sequentially turning widget pages by the determined page turning number subsequently to the release of the pointing point.

According to an example embodiment, a method implemented by a processor(s) may include outputting a widget object via a cover display of an electronic device. The method may include moving the widget object according to a movement of a pointing point formed on the cover display. The method may include determining a page turning number based on a moving distance of the pointing point at a time point when the pointing point is moved and then is released, a moving velocity of the pointing point, and a length of the widget object in one direction. The method may include outputting a widget object of a target widget page by sequentially turning widget pages by the determined page turning number subsequently to the release of the pointing point.

### BRIEF DESCRIPTION OF DRAWINGS

FIG. 1 is a block diagram illustrating an electronic device 101 in a network environment 100 according to various example embodiments.

FIG. 2A is a diagram of an electronic device in an unfolded state according to various embodiments, and FIG. 2B is a diagram of the electronic device in a folded state according to various example embodiments.

FIGS. 3A-3D illustrate a widget object according to various embodiments.

FIG. 4 illustrates an arrangement sequence of widget objects based on a screen area according to various example embodiments.

FIG. 5 is a flowchart illustrating a method of changing a widget page according to various example embodiments.

FIG. 6A illustrates turning a widget page according to various embodiments. FIG. 6B illustrates transition animation according to velocity of a drag input according to various example embodiments.

FIG. 7 illustrates turning a widget page according to a display size according to various example embodiments.

FIG. 8 illustrates turning a widget page according to a grip state according to various example embodiments. FIG. 9 illustrates an example of determining whether a gesture is provided by a gripping hand according to various example embodiments.

FIG. 10 illustrates page turning animation according to various example embodiments.

FIGS. 11 and 12 illustrate turning a widget page based on an additional gesture according to various example embodiments.

FIGS. 13-16 illustrate operations based on a gesture input in a notch area according to various example embodiments.

## BEST MODE FOR CARRYING OUT THE INVENTION

Hereinafter, embodiments will be described in detail with reference to the accompanying drawings. When describing the embodiments with reference to the accompanying drawings, like reference numerals refer to like elements and a repeated description related thereto will be omitted.

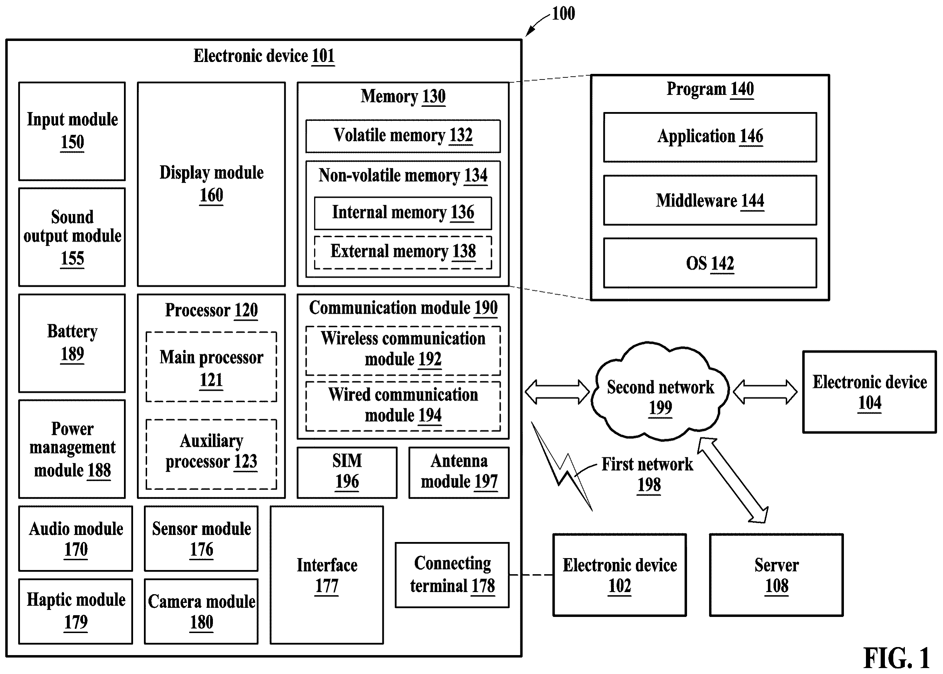

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added to the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102) (e.g., a speaker or headphone) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, ISPs, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., the AP) and support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN))). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a PCB, a RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-Things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

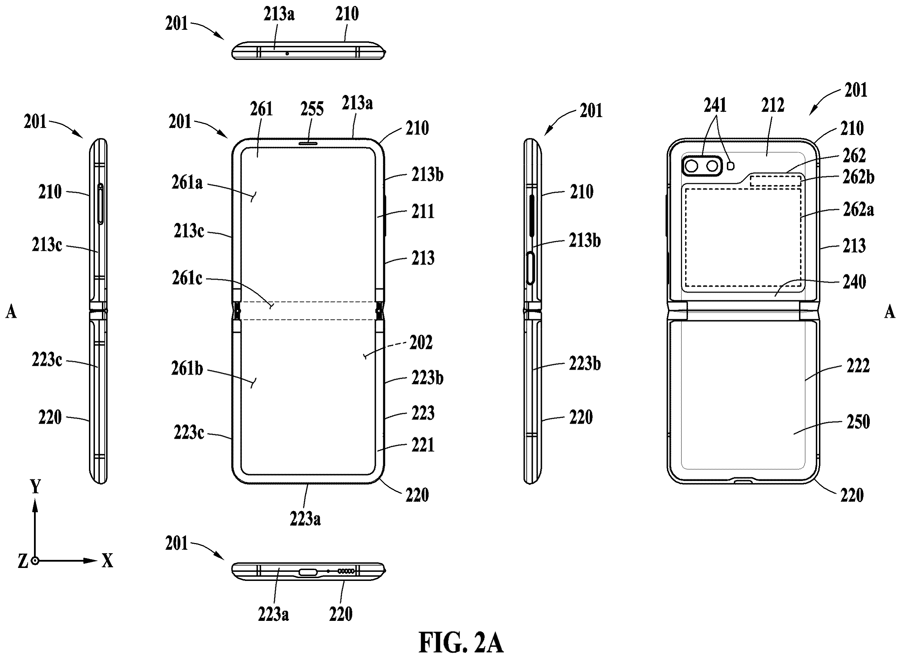

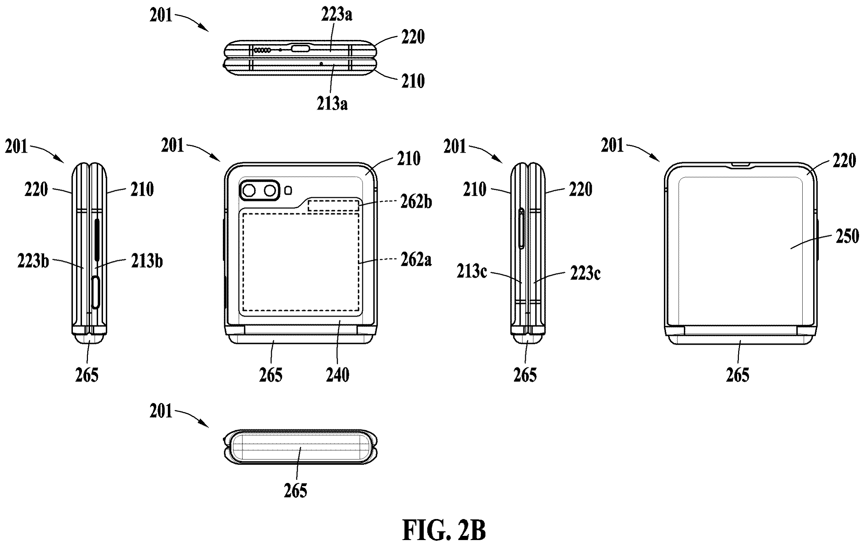

FIG. 2A is a diagram of an electronic device in an unfolded state according to various embodiments, and FIG. 2B is a diagram of the electronic device in a folded state according to various embodiments.

Referring to FIGS. 2A and 2B, a foldable electronic device 201 may include a pair of housings 210 and 220 rotatably coupled to each other through a hinge structure to be folded with respect to each other, a hinge cover 265 for covering foldable portions of the pair of housings 210 and 220, and a display 261 (e.g., a flexible display or a foldable display) disposed in a space formed by the pair of housings 210 and 220. In the present disclosure, a surface on which the display 261 (e.g., a main display) is disposed may be defined as a front surface of the foldable electronic device 201, and a surface opposite to the front surface may be defined as a rear surface of the foldable electronic device 201. In addition, a surface surrounding a space between the front surface and the rear surface may be defined as a side surface of the foldable electronic device 201.

In an embodiment, the foldable electronic device 201 may include the first housing 210, the second housing 220, a first rear cover 240, and a second rear cover 250. The pair of housings 210 and 220 of the electronic device 201 are not limited to the shapes or the combination and/or coupling of components shown in FIGS. 2A and 2B, and may be implemented in other shapes or by another combination and/or coupling of components.

In an embodiment, the first housing 210 and the second housing 220 may be disposed on both sides (e.g., an upper portion and a lower portion) based on a folding axis A, and may be disposed substantially symmetrically relative to the folding axis A. In an embodiment, an angle and/or a distance between the first housing 210 and the second housing 220 may vary depending on whether the electronic device 201 is in an unfolded state, a folded state, or an intermediate state.

In an embodiment, the first housing 210 may be connected to a hinge structure in the unfolded state of the electronic device 201. The first housing 210 may include a first surface 211 facing the front surface of the electronic device 201, a second surface 212 facing a direction opposite to the first surface 211, and a first side portion 213 enclosing at least a portion of a space between the first surface 211 and the second surface 212. The first side member 213 may include a first side surface 213a disposed substantially in parallel with the folding axis A, a second side surface 213b extending in a direction substantially perpendicular to the folding axis A from one end of the first side surface 213a, and a third side surface 213c extending in a direction substantially perpendicular to the folding axis A from another end of the first side surface 213a and substantially parallel to the second side surface 213b. The second housing 220 may be connected to the hinge structure in the unfolded state of the electronic device 201. The second housing 220 may include a third surface 221 facing the front surface of the electronic device 201, a fourth surface 222 facing a direction opposite to the third surface 221, and a second side portion 223 enclosing at least a portion of a space between the third surface 221 and the fourth surface 222. The second side member 223 may include a fourth side surface 223a disposed substantially in parallel with the folding axis A, a fifth side surface 223b extending in a direction substantially perpendicular to the folding axis A from one end of the fourth side surface 223a, and a sixth side surface 223c extending in a direction substantially perpendicular to the folding axis A from another end of the fourth side surface 223a and substantially parallel to the fifth side surface 223b. The first surface 211 and the third surface 221 may face each other when the electronic device 201 is in the folded state.

In an embodiment, the electronic device 201 may include a recessed accommodating portion 202 for accommodating the display 261 through the structural coupling of the first housing 210 and the second housing 220. The accommodating portion 202 may have substantially the same size as the display 261.

In an embodiment, at least a portion of the first housing 210 and the second housing 220 may be formed of a metal material or a non-metal material having a predetermined magnitude of rigidity appropriate to support the display 261.

In an embodiment, the electronic device 201 may include a sound output module 255 (e.g., the sound output module 155) (e.g., the sound output module 155) disposed through at least a partial area of the first surface 211.

In an embodiment, the first rear cover 240 may be disposed on the second surface 212 of the first housing 210, and may have a substantially rectangular periphery. At least a portion of the periphery of the first rear cover 240 may be surrounded by the first housing 210. The second rear cover 250 may be disposed on the fourth surface 222 of the second housing 220, and may have a substantially rectangular periphery. At least a portion of the periphery of the second rear cover 250 may be surrounded by the second housing 220.

In an embodiment, the first rear cover 240 and the second rear cover 250 may have substantially symmetrical shapes with respect to the folding axis A. In another embodiment, the first rear cover 240 and the second rear cover 250 may have different shapes.

In an embodiment, the first housing 210 and the first rear cover 240 may be detachably connected, coupled, or bonded to each other, and the second housing 220 and the second rear cover 250 may be detachably connected, coupled, or bonded to each other. In another embodiment, the first housing 210 and the first rear cover 240 may be integrally formed, and the second housing 220 and the second rear cover 250 may be integrally formed.

In an embodiment, the first housing 210, the second housing 220, the first rear cover 240, and the second rear cover 250 may provide a space in which various components (e.g., a PCB, the antenna module 197, the sensor module 176, or the battery 189) of the electronic device 201 may be arranged through a structure in which the first housing 210, the second housing 220, the first rear cover 240, and the second rear cover 250 are coupled to one another. In an embodiment, at least one component may be visually exposed on the rear surface of the electronic device 201. For example, at least one component may be visually exposed through a first rear area 241 of the first rear cover 240. In this case, the component may include a proximity sensor, a rear camera module, and/or a flash. The display 261 (e.g., the main display) may be disposed on the front surface of the electronic device 201, and a sub-display 262 may be disposed on the rear surface of the electronic device 201. In an embodiment, at least a portion of the sub-display 262 may be visually exposed on the first rear cover 240.

In an embodiment, the display 261 may be disposed in the accommodating portion 202 formed by the pair of housings 210 and 220. For example, the display 261 may be arranged to occupy substantially most of the front surface of the electronic device 201. The front surface of the electronic device 201 may include an area in which the display 261 is disposed, and a partial area (e.g., an edge area) of the first housing 210 and a partial area (e.g., an edge area) of the second housing 220, which are adjacent to the display 261. The rear surface of the electronic device 201 may include the first rear cover 240, a partial area (e.g., a periphery area) of the first housing 210 adjacent to the first rear cover 240, the second rear cover 250, and a partial area (e.g., a periphery area) of the second housing 220 adjacent to the second rear cover 250. In an embodiment, the display 261 may be a display in which at least one area is deformable into a planar surface or a curved surface. In an embodiment, the display 261 may include a folding area 261c, a first area 261a on a first side (e.g., the upper side) of the folding area 261c, and a second area 261b on a second side (e.g., the lower side) of the folding area 261c. For example, the first area 261a may be disposed in the first surface 211 of the first housing 210, and the second area 261b may be disposed in the third surface 221 of the second housing 220. However, the area division of the display 261 is merely an example, and the display 261 may be divided into a plurality of areas depending on the structure or functions of the display 261. For example, as shown in FIG. 2A, the display 261 may be divided into areas based on the folding axis A or the folding area 261c extending in parallel to an x-axis, or the display 261 may be divided into areas based on another folding area (e.g., a folding area extending in parallel to an y-axis) or another folding axis (e.g., a folding axis parallel to the y-axis). The area division of the display 261 as above is merely physical division based on the pair of housings 210 and 220 and the hinge structure, and the display 261 may display substantially one screen through the pair of housings 210 and 220 and the hinge structure. In an embodiment, the first area 261a and the second area 261b may have substantially symmetrical shapes with respect to the folding area 261c.

In an embodiment, the hinge cover 265 may be disposed between the first housing 210 and the second housing 220 and configured to cover the hinge structure. The hinge cover 265 may be hidden by at least a portion of the first housing 210 and the second housing 220 or exposed to the outside according to the operating state of the electronic device 201. For example, as shown in FIG. 2A, when the electronic device 201 is in the unfolded state, a hinge cover (e.g., the hinge cover 265 of FIG. 2B) may not be exposed to the outside as the hinge cover is occluded by the first housing 210 and the second housing 220, and when the electronic device 201 is in the folded state, the hinge cover 265 may be exposed to the outside between the first housing 210 and the second housing 220. Meanwhile, when the electronic device 201 is in an intermediate state in which the first housing 210 and the second housing 220 form an angle with each other, at least a portion of the hinge cover 265 may be exposed to the outside between the first housing 210 and the second housing 220. In this case, an area of the hinge cover 265 exposed to the outside may be smaller than the area of the hinge cover 265 exposed when the electronic device 201 is in the folded state. In an embodiment, the hinge cover 265 may have a curved surface.

Describing the operation of the electronic device 201, when the electronic device 201 is in an unfolded state (e.g., the state of the electronic device 201 of FIG. 2A), the first housing 210 and the second housing 220 may form a first angle (e.g., about 180 degrees) with each other, and the first area 261a and the second area 261b of the display 261 may be oriented in substantially the same direction. The folding area 261c of the display 261 may be on substantially the same plane as the first area 261a and the second area 261b. In another embodiment, when the electronic device 201 is in the unfolded state, as the first housing 210 rotates at a second angle (e.g., about 360 degrees) relative to the second housing 220, the second surface 212 and the fourth surface 222 may face each other. Meanwhile, when the electronic device 201 is in the folded state (e.g., the state of the electronic device 201 of FIG. 2B), the first housing 210 and the second housing 220 may face each other. The first housing 210 and the second housing 220 may form an angle of about 0 degrees to about 10 degrees, and the first area 261a and the second area 261b of the display 261 may face each other. At least a portion of the folding area 261c of the display 261 may be deformed into a curved surface. Meanwhile, when the electronic device 201 is in the intermediate state, the first housing 210 and the second housing 220 may form a predetermined angle with each other. An angle (e.g., a third angle, for example about 90 degrees) formed by the first area 261a and the second area 261b of the display 261 may be greater than that when the electronic device 201 is in the folded state and less than that when the electronic device 201 is in the unfolded state. At least a portion of the folding area 261c of the display 261 may be deformed into a curved surface. In this case, a curvature of the curved surface of the folding area 261c may be smaller than that when the electronic device 201 is in the folded state.

A screen area of the sub-display 262 may include a cover area 262a and a notch area 262b. For example, the screen area may be an area where various objects and graphic representations are drawn. The notch area 262b may have a shape protruding from an edge of the cover area 262a. In FIGS. 2A and 2B, the notch area 262b may be an area protruding from an edge adjacent to the first rear area 241 among edges of the cover area 262a. For example, the edge of the cover area 262a adjacent to the first rear area 241 may be connected to an inclined edge of the notch area 262b. The edge connected to the inclined edge of the notch area 262b may be parallel to an edge adjacent to the hinge in the cover area 262a. However, this is only an example, and the shapes of the cover area 262a and the notch area 262b forming the screen area of the sub-display 262 may vary depending on the design. The cover area 262a and the notch area 262b may be designed so that the sub-display 262 may occupy an area other than an area occupied by other components (e.g., the camera) on the surface in which the sub-display 262 is disposed, as much as possible. In addition, the area division of the sub-display 262 as described above is based on the shape only for ease of description, and the two areas of the sub-display 262 may display a substantially single screen. The sub-display 262 may display a screen mainly when the electronic device 201 is in the folded state, but the example is not limited thereto.

Meanwhile, the embodiments of the electronic device described herein are not limited to a form factor of the electronic device 201 described with reference to FIGS. 2A and 2B, and may also apply to electronic devices with various form factors.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element(s).

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include code generated by a compiler or code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

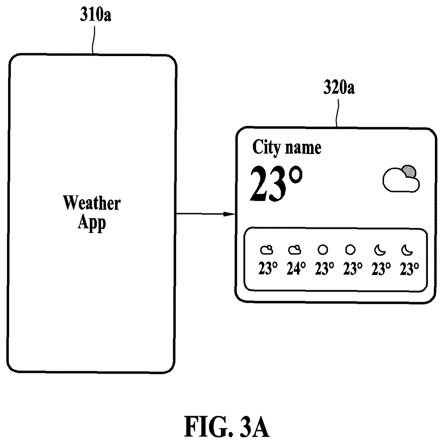

FIGS. 3A to 3D illustrate a widget object according to various embodiments.

According to various embodiments, a widget object may be an object corresponding to a graphic representation that visualizes a widget application on a screen of a display (e.g., the sub-display) and may also be referred to as a widget graphic representation. The widget application may be a third application (e.g., a small application) embedded in a first application (e.g., a cover screen application, a home screen application, a wearable watch home widget application, a note personal computer (PC) home widget application, or a tablet home widget application) to obtain an update according to at least one of an event or periodicity from one or more second applications. The second application may include a music playback application, a schedule management application, a calendar application, a stopwatch application, a timer application, an alarm application, a weather application, a health record (e.g., a step count) application, a call application, a peripheral device (e.g., wireless earphones) management application, and/or a recorder application. However, this is only an example, and the second application is not limited thereto.

The second application may be, for example, an application in which a widget function is enabled among applications installed in an electronic device. The electronic device may select one or more second applications from applications in which widget functions are enabled based on a user input (e.g., a widget additional input). For example, the electronic device may generate a widget application that provides at least one of an operation, a function, or information about the selected one or more second applications and may add or embed the generated widget application in the first application (e.g., the cover screen application or the home screen application). The widget application may be executed together with the first application.

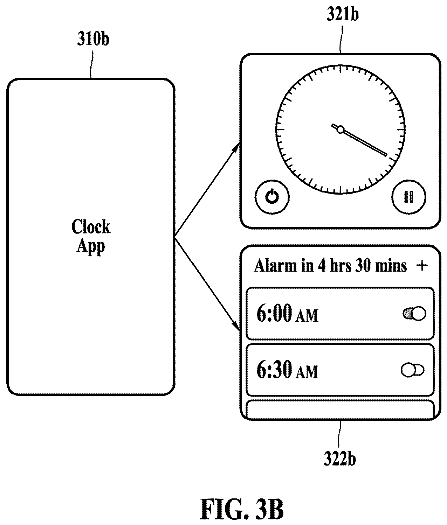

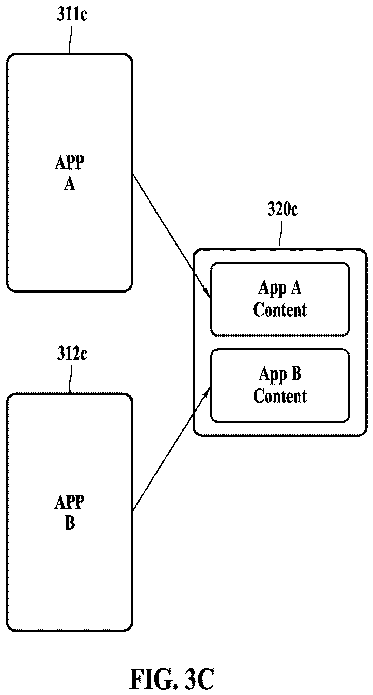

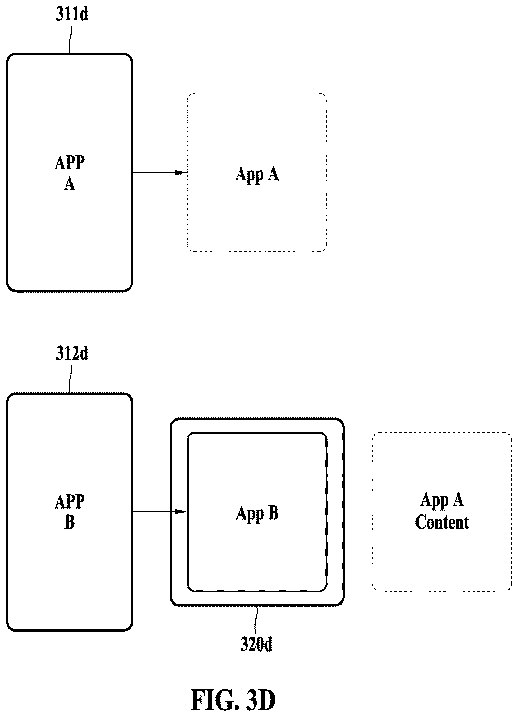

For example, FIG. 3A illustrates an example in which a single widget is derived from a single application. A second application 310a may be a weather application, and a single widget application 320a may provide weather information. FIG. 3B illustrates an example in which a plurality of widgets is derived from a single application. A second application 310b may be a clock application, a first widget application 321b may provide a stopwatch function of the clock, and a second widget application 322b may provide an alarm function of the clock. FIG. 3C illustrates an example in which a single widget is derived from multiple applications. A widget 320c that provides content A and content B may be generated from an application A 311c and an application B 312c. FIG. 3C illustrates an example in which information about multiple applications is output on a screen area (or a widget area). FIG. 3D illustrates an example in which a widget 320d displays content of one of an application A 311d and an application B 312d, which are linked to the widget 320d.

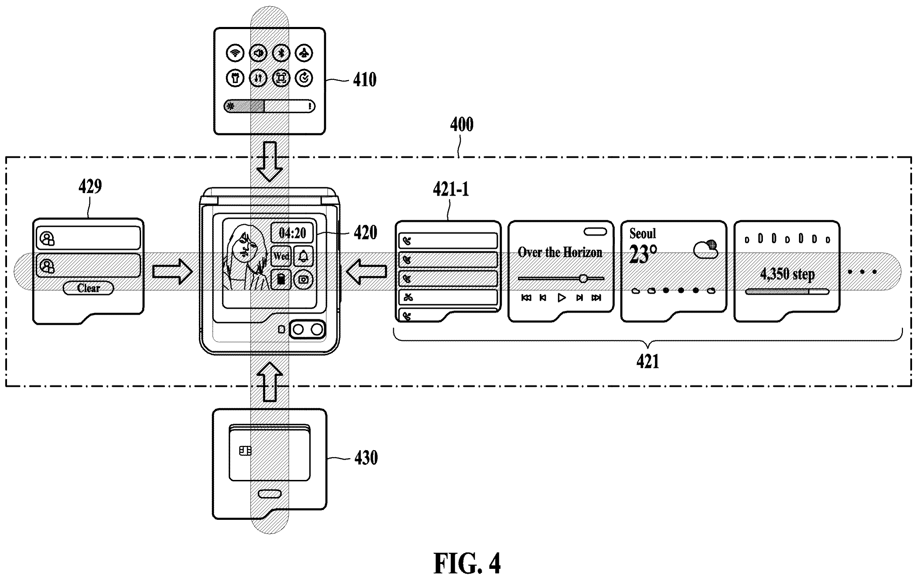

FIG. 4 illustrates an arrangement sequence of widget objects based on a screen area according to various embodiments.

According to various embodiments, an electronic device (e.g., the electronic device 201 of FIGS. 2A and 2B) may display an object selected from objects included in an arrangement sequence 400 in a screen area. The arrangement sequence 400 may indicate an arrangement order of one or more objects. In an example illustrated in FIG. 4, the arrangement sequence 400 may include an alarm object 429, a cover home widget 420, and one or more widget objects 421. In the arrangement sequence 400, an index may be allocated to each of the objects 421. For example, an index of the alarm object 429 may be -1, an index of the cover home widget 420 may be 0, and an index of the widget object 421 may be an integer greater than or equal to 1. The electronic device may select an object from the arrangement sequence 400 according to a gesture input based on a pointing input to the screen area (or the widget area).

The pointing input may be an input that indicates a point in the screen area of a display (e.g., the cover display or main display). For example, the pointing input may include at least one of a touch input, a hovering input, an input based on gaze tracking, an input based on tracking a motion of a user, or an input by a pointing device (e.g., a mouse or an external controller). The touch input may be an input identified based on detecting contact between a touch device (e.g., a touch screen) and an object (e.g., a finger or a stylus pen). In the present disclosure, an example in which a pointing input is a touch input and a gesture input is based on at least one of formation, movement, a moving velocity, a moving direction, a moving trajectory, or release of a touch input is mainly described.

The cover home widget 420 may be a widget set as default among a plurality of widget objects included in the arrangement sequence 400. For example, the cover home widget 420 may be a widget that is directly displayed in the screen area (or the widget area) of a display (e.g., the sub-display 262 of FIGS. 2A and 2B), when the power is turned on or the display is turned on. The cover home widget 420 may be separately configured, but the example is not limited thereto. One of general widget applications may be set as the cover home widget 420.

The one or more widget objects 421 may be the objects described with reference to FIGS. 3A and 3B above and for example, may have indexes following the index of the cover home widget 420 in the arrangement sequence 400. For example, the electronic device may select a widget object 421-1 from the widget objects 421 of the arrangement sequence 400 based on a gesture input.

In addition, the electronic device may further provide a device function page 410 (e.g., a quick panel) and an additional page 430 (e.g., a near field communication (NFC) payment page). The electronic device may select and display one of the device function page or the additional page in the screen area based on the gesture input. The device function page 410 may be a page that provides an object (e.g., a button object) for at least one of activating, deactivating, or controlling an operation and/or a function of the electronic device. As an example of the additional page 430, an NFC payment page may be a page that provides an object (e.g., a graphic representation) for a payment function using a card registered to the electronic device.

The electronic device may determine an object to be displayed next based on a currently displayed object according to a gesture input to the screen area (or the widget area). The electronic device may display one of the objects included in the arrangement sequence 400, the device function page 410, or the additional page 430 on the screen area. Hereinafter, turning a widget page based on a gesture input is described.

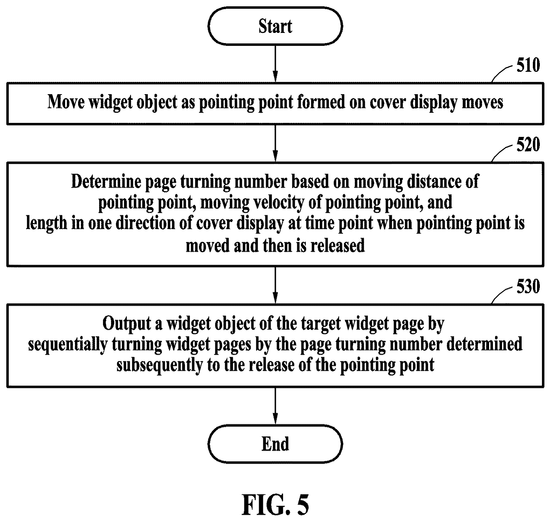

FIG. 5 is a flowchart illustrating a method of changing a widget page according to various embodiments.

In operation 510, an electronic device (e.g., the electronic device 201 of FIGS. 2A and 2B) may move a widget object as a pointing point formed on a cover display moves. A gesture input in which the pointing point is moved and then is released may be referred to as a swipe input.

In operation 520, the electronic device may determine a page turning number based on a moving distance of the pointing point, a moving velocity of the pointing point, and a length in one direction of the widget object at a time point when the pointing point is moved and then is released. The electronic device may determine the page turning point based on a gesture input to the screen area (or the widget area). The page turning number may correspond to a difference between an index of a currently displayed object and an index of an object to be transitioned and displayed. The electronic device may determine a target widget page (e.g., the object to be transitioned and displayed) based on the page turning number and an object at a time point (e.g., current) when the pointing point is formed.

The length in one direction of the widget object may be the length (e.g., width) in a parallel direction to an edge of the cover display. The length in one direction of the widget object may be the height or width of the widget object. For example, when widget objects are arranged along a first axis (e.g., the horizontal axis) and are transitioned based on a gesture input (e.g., a horizontal scroll input) along the first axis, the electronic device may determine the page turning number based on the horizontal length (e.g., the width) of the widget object in addition to a gesture amount (e.g., the moving distance or moving velocity of the pointing point). The gesture amount may be an amount indicating a degree of the gesture and may be a value based on the moving distance of the pointing point, the moving velocity of the pointing point, or a combination thereof. In another example, when the widget objects are arranged along a second axis (e.g., the vertical axis) and are transitioned based on a gesture input (e.g., a vertical scroll input) along the second axis, the electronic device may determine the page turning number based on the vertical length (e.g., the height) of the widget object in addition to the gesture amount.

In operation 530, the electronic device may output a widget object of the target widget page by sequentially turning widget pages by the page turning number determined subsequently to the release of the pointing point. For example, the electronic device may output a widget object of a next widget page based on that the page turning number is 1. In another example, the electronic device may sequentially output a widget object from a widget object of a current widget page to a widget object of the target widget page according to the arrangement sequence based on that the page turning number is 2 or above. An operation of turning the widget page may include sequentially appearing, moving, and disappearing, in one direction, objects arranged in the arrangement sequence from the current widget object to the target widget object. Accordingly, the electronic device may switch to display the widget object of the target widget page by turning widget pages with one gesture.

For reference, the present disclosure mainly describes an operation on the cover display, but the example is not limited thereto. Unless otherwise described, the widget object may be displayed and transitioned identically or similarly on a main display (e.g., the display 261 of FIG. 2A). For example, a widget view may be displayed in the screen area on the cover display, but on the main display, the widget view may be displayed in a partial area (e.g., the widget area) of the screen area. An area occupied by the widget view on a display (e.g., the main display) may be referred to as a widget area. When displaying the widget view on the main display, the electronic device may turn the widget page based on a gesture input in the widget area.

Accordingly, when a plurality of widget applications is executed in a home screen application (e.g., the cover home screen application or the main home screen application), the electronic device may provide users with the convenience of rapid widget navigation. For example, the electronic device may provide the convenience of intuitively skipping multiple widget pages and entering the target widget page at once in response to the touch velocity of the user on the display (e.g., the cover display) with a limited form factor.

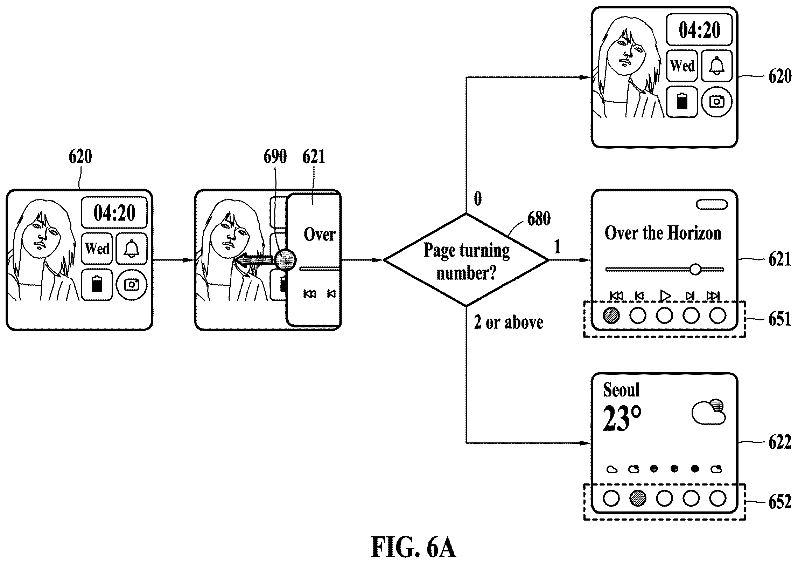

FIG. 6A illustrates turning a widget page according to various embodiments.

An electronic device (e.g., the electronic device 201 of FIGS. 2A and 2B) may display an object on a screen area of a display (e.g., the sub-display (or the cover display) 262 of FIGS. 2A and 2B). FIG. 6A illustrates an example in which the electronic device switches from a cover home widget 620 to other widget objects 621 and 622 based on a gesture input (e.g., a swipe input 690) to the cover home widget 620 of which a widget index is 0. However, the example is not limited thereto, and the electronic device may switch a widget object displayed in the screen area based on the swipe input 690 for a widget object having a widget index (e.g., an index greater than or equal to 1) other than 0.

According to various embodiments, the electronic device may output a current widget object (e.g., the cover home widget 620). The electronic device may detect formation and movement of a pointing point on the current widget object. As the pointing point moves, the electronic device may display at least a portion of another widget object adjacent to the currently displayed widget object on the screen area. For example, the electronic device may display the widget object 621 (e.g., a widget object having an immediately previous or subsequent index) adjacent to the currently displayed widget object in the arrangement sequence.

For example, the electronic device may output a widget object having a subsequent index (e.g., 1) to an index (e.g., 0) of the currently displayed widget object in the arrangement sequence based on the swipe input 690 from a first side (e.g., the right side) to a second side (e.g., the left side) in the screen area. In another example, the electronic device may output a widget object having a previous index (e.g., -1) to the index (e.g., 0) of the currently displayed widget object in the arrangement sequence based on the swipe input 690 from the second side to the first side in the screen area.

For reference, the electronic device may blur and output the cover home widget 620 as the background for other widget objects and may display the widget object by at least partially overlaying the widget object on the cover home widget 620. In the example illustrated in FIG. 6A, the electronic device may overlay and output the adjacent widget object 621 on the cover home widget 620. While displaying a widget object (e.g., an object having a position index greater than or equal to 1) that is different from the cover home widget 620, the electronic device may detect the swipe input 690 to the widget object. The electronic device may stop outputting a portion of the widget object out of the screen area by moving the widget object toward the outside of the screen area as the pointing point is moved by the swipe input 690. At the same time, the electronic device may output a portion of the adjacent widget object 621 that enters the screen area by moving the widget object 621 adjacent to the widget object in the arrangement sequence as the pointing point is moved by the swipe input 690. The widget object 621 adjacent to the widget object may move in one direction (e.g., the horizontal axis direction of the cover display) corresponding to the swipe input 690. For example, the one direction may be a direction from the first side (e.g., the right side) of the display (e.g., the cover display) to the second side (e.g., the left side) or from the second side to the first side. In the present disclosure, an example in which widget objects are horizontally arranged is mainly described. However, when the widget objects are vertically arranged to support vertical scrolling, the first side and the second side may be an upper side and a lower side, respectively.

The electronic device may move an adjacent widget index into the screen area by a distance based on a moving distance of the pointing point. As described above, when the currently displayed object is the cover home widget 620, the electronic device may blur and output the cover home widget 620 as the background. When the currently displayed object is a general widget object, the electronic device may gradually reduce a portion output in the screen area by moving the currently displayed object toward the outside of the screen area in one direction by the distance based on the moving distance of the pointing point. Conversely, the electronic device may gradually increase the portion output in the screen area by moving the adjacent widget object 621 into the screen area in one direction. The electronic device may provide the user with visual feedback (or a transition effect) in which the widget objects move according to the movement of the pointing point by moving the adjacent widget object 621 into the screen area and withdrawing the currently displayed object.

In operation 680, the electronic device may determine a page turning number based on release of the pointing point. For example, the electronic device may determine the page turning point based on a gesture amount (e.g., the moving distance or the moving velocity) of the pointing input and a length (e.g., the width) of the object. The page turning number may be calculated based on Equation 1 below.

[Equation 1]

$$Page\ Turning\ Number = \frac{\{\text{Swipe Distance} - (Widget\ Size \times 0.5)\} + \left(\frac{Touch\ Velocity \times Offset}{Widget\ Size}\right)}{Widget\ Size}$$

In Equation 1 described above, the swipe distance may indicate a moving distance of a pointing point from when the pointing point is formed to when the pointing point is released. The widget size may be a size of the widget object, and for example, may be an axial length (e.g., the width or height of the widget object). The touch velocity may indicate a moving velocity from when the pointing point is formed to when the pointing point is released. The offset may be a weight affecting the touch velocity and may be determined depending on the design. The offset may be dynamically adjusted based on at least one of a grip state or usage history of the user. The offset (or an offset weight) may be a weight for correction, and for example, may have a value of 0.0001. However, the example is not limited thereto, and the offset may be selected within a range between 0.0001 and 0.000083. The {Swipe Distance - (*Widget Size* × 0.5)} term may be a component value corresponding to the moving distance of the widget object by the swipe input 690 and may indicate a default moving distance of the widget. $\left(\frac{Touch\ Velocity \times Offset}{Widget\ Size}\right)$ may be an additional component value in which the offset weight is applied to the touch velocity relative to the widget size and may be the additional moving distance of the widget depending on the touch velocity. The electronic device may determine a page turning number by dividing a sum of the default moving distance of the widget and the additional moving distance of the widget by the widget size (e.g., the widget width). When the page turning number is calculated as a real number, the electronic device may obtain an integer by truncating a decimal part. However, the example is not limited thereto, and the electronic device may obtain the page turning number as an integer using other schemes (e.g., rounding).

For example, when the determined page turning number is 0, the electronic device may revert to the display of the previous object. In the example illustrated in FIG. 6A, the electronic device may stop outputting the adjacent widget object 621 by moving the adjacent widget object 621 that is temporarily moved from the first side (e.g., the right side) to the second side (e.g., the left side), to the outside of the screen. The electronic device may output a screen including only the cover home widget 620.

In another example, when the determined page turning number is 1, the electronic device may display the adjacent widget object 621. In the example illustrated in FIG. 6A, the electronic device may continue to move the adjacent widget object 621 from the first side (e.g., the right side) to the second side (e.g., the left side) until the adjacent widget object 621 completely enters the screen area. The electronic device may display the adjacent widget object 621 by stopping moving the adjacent widget object 621 when the adjacent widget object 621 is completely contained in the screen area. In other words, the electronic device may output a screen that is turned one page to the right in the arrangement sequence. The electronic device may output an index indicator 651 indicating a first index.

In another example, when the determined page turning number is 2 or above, the electronic device may switch to a widget object of a target widget page that is determined based on the page turning number and the current widget index. The electronic device may process the currently displayed object as background or may move the currently displayed object outside the screen area. The electronic device may place the adjacent widget object 621 inside the screen area by rapidly moving the adjacent widget object 621 that is immediately adjacent to the currently displayed object in one direction (e.g., a direction from the first side toward the second side). The electronic device may continue to move the adjacent widget object 621 in the one direction even when the adjacent widget object 621 is completely contained in the screen area. The electronic device may cause the adjacent widget object 621 to gradually disappear from the opposite side (e.g., the second side). Meanwhile, the electronic device may move a next widget object into the screen area. The electronic device may continue to move widget objects until reaching a target widget object 622 of the target widget page. In the example illustrated in FIG. 6A, since the widget page turning number is 2, the electronic device may output a screen turned two pages to the right in the arrangement sequence. The electronic device may output an index indicator 652 indicating a second index.

For reference, FIG. 6A illustrates page transition in the direction from the first side to the second side, but the example is not limited thereto. When the widget page turning number is negative (e.g., -1), the electronic device may move the current object in the other direction (e.g., the direction from the second side to the first side). The electronic device may cause a widget object of a previous position index to appear from the second side and move toward the first side. The electronic device may continue to move the widget object in the other direction until reaching a widget object of the target widget page. When the widget page turning number is -1, a screen turned one page to the left may be output.

Accordingly, by turning the widget pages as many as the page turning number calculated at a time point when the pointing point is released, the electronic device may skip widgets by the number of pages desired by a user and may display the target widget object 622.

According to Equation 1 above, the page turning number may depend on a size (e.g., the length) of the widget object. For example, when the widget object has a first length in one direction, the electronic device may turn the widget page as many as a first page number with respect to a swipe amount. The swipe amount may include at least one of swipe velocity or a swipe distance. When the widget object has a second length in the one direction, the electronic device may turn the widget page as many as a second page number with respect to the swipe amount. The first length may be different from the second length, and the first page number may be different from the second page number. Accordingly, even when the length (e.g., the width or height of the widget object) of the widget object is changed, the electronic device may provide operability that is dynamically intuitive while matching intention of the user according to Equation 1 above.

For reference, the present disclosure mainly describes an example of horizontal scrolling, but the example is not limited thereto, and the present disclosure may be applied to an example of vertical scrolling. In this case, the swipe input 690 in Equation 1 may be vertical swipe, and the widget size may be the height of the widget object.

According to various embodiments, the offset weight in Equation 1 may be dynamically adjusted. For example, the electronic device may tune (or adjust) the offset weight based on usage history of the user. When an input set of the temporally adjacent swipe inputs 690 is detected, the electronic device may adjust a weight for calculating the page turning number. In response to receiving the additional swipe input 690 while sequentially turning the plurality of widget pages, the electronic device may adjust the weight for calculating the page turning number. When the additional swipe input 690 occurs during the transition or before sufficient time has elapsed after the swipe input 690 to turn the widget page, the additional swipe input 690 may be a manipulation error.

For example, when a direction of the preceding swipe input 690 is different from a direction of the subsequent swipe input 690, the electronic device may decrease the offset weight. The electronic device may decrease the offset weight from 0.0001 to 0.000083. This may be interpreted as exceeding the page turning number intended by the user. For example, when the user swipes and moves three pages to the right and then immediately moves one page to the left, the page may be moved more than the user's intention with respect to the swipe amount (e.g., the swipe velocity or swipe distance). In another example, when a direction of the preceding swipe input 690 is the same as a direction of the subsequent swipe input 690 in the input set of the temporally adjacent swipe inputs 690, the electronic device may increase the offset weight. This is because it may be interpreted as the page turning number is fewer than the page turning number intended by the user.

When the offset weight is adjusted, the page turning number may vary with respect to the same gesture amount (e.g., the swipe amount). For example, the electronic device may move the page by a first page turning number based on the swipe input 690 of the swipe amount. When the input set for turning the widget pages is detected a predetermined number (e.g., twice) or more, the electronic device may adjust the offset weight described above. When the input set of the temporally adjacent swipe inputs 690 is detected a predetermined number or times or more to turn the widget pages, the electronic device may turn the widget pages by a second page turning number that is different from the first page turning number with respect to the swipe input 690 of the same swipe amount.

In Equation 1 above, the example where the page turning number depends on the widget size (e.g., the widget height or the widget width) is mainly described. However, the example is not limited thereto, and the page turning number may depend on a size (e.g., the display width or display height) of a screen area of a display (e.g., the cover display or the main display). In this case, the display size may be used instead of the widget size in Equation 1.

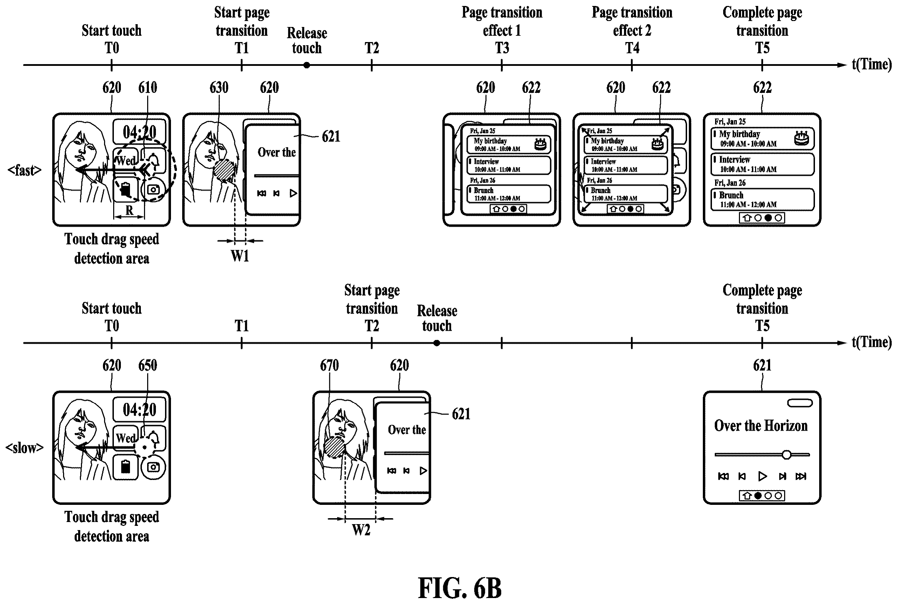

FIG. 6B illustrates transition animation according to velocity of a drag input according to various embodiments.

In FIG. 6B, <fast> may describe transition animation in the case of a fast drag input, and <slow> may describe transition animation in the case of a slow drag input. A drag input may refer to an input in which a pointing position (e.g., a touch position) moves while pointing (e.g., a touch) is formed. A drag based on the touch input may be referred to as a touch drag, and velocity of a drag input (e.g., moving velocity of a touch point) may be referred to as drag velocity.

An electronic device (e.g., the electronic device 201 of FIGS. 2A and 2B) may set a velocity detection area for a touch drag. For example, based on recognizing a touch, the electronic device may set a specific range (e.g., an area corresponding to a circular radius R based on a touch point) based on touch points 610 and 650.

The electronic device may change intervals W1 and W2 between the first widget object 621 that is moved and the touch points 630 and 670 based on calculated drag velocity. For example, based on the drag velocity being fast, the electronic device may display the first widget object 621 at the first interval W1 for the touch point 630. In another example, based on the drag velocity being slow, the electronic device may display the first widget object 621 at the second interval W2 for the touch point 670. For example, the second interval W2 may be greater than the first interval W1, but the example is not limited thereto and may vary depending on the design.

The electronic device may need to change an interval between widget pages according to the touch velocity (e.g., the drag velocity). For example, the electronic device may determine a spring animation value in which a widget object moves to a position to be displayed on the center of the screen in proportion to the touch velocity. The electronic device may determine the interval between widget pages according to the spring animation value.

The electronic device may detect a touch start at a time point T0 and may begin page transition at a time point T1 based on the touch drag. Thereafter, the electronic device may complete the page transition at a time point T5. During the page transition between the time point T1 and the time point T5, the electronic device may provide a page transition effect.

For example, during the page transition for moving the widget object at fast drag velocity, the electronic device may provide a page transition effect 1 at a time point T3 and a page transition effect 2 at a time point T4. <fast> illustrates an example in which the fast drag input is released between the time point T2 and a time point T2. The page transition effect 1 may be an effect that resizes the size of the widget object 622 displayed on the center of the screen to be greater than the widget object 621 in a previous position. The page transition effect 2 may be an effect that provides a bouncing effect and enlarges the target widget object 622 while moving the target widget object 622 to a boundary surface of the first side (e.g., the left side) when moving two or more widget objects (e.g., when the widget page turning number is equal to or greater than 2). When the page transition effect 2 is completed, the target widget object 622 may be displayed on the center of the screen.

In another example, during the page transition for moving the single widget object 621 at slow drag velocity, the electronic device may move the single widget object 621 while resizing the single widget object 621 and may complete the page transition. In <slow>, the slow drag input may be released between the time point T2 and the time point T3.

For reference, regardless of the slow drag or fast drag, the electronic device may complete the page transition at a time point (e.g., the time point T5) when the same time has elapsed from the time point of the touch start (e.g., the time point T0). Based on the slow drag input (e.g., an input moving at a velocity of v1), the electronic device may perform the page transition during a transition time Time #1 (e.g., 450 milliseconds (ms)) from page 1 to page 2. Based on the fast drag input (e.g., an input moving at a velocity of $2 \times v1$), the electronic device may perform the page transition during a transition time Time 2 (e.g., 450 ms) from page 1 to page 3. As described above, regardless of the velocity of the drag input, the electronic device may complete the page transition from a drag start page to the target widget page during the same transition time (e.g., the time point T0 to the time point T5) from the time point of the drag start. The electronic device may calculate the touch velocity at the time point of touch release and may determine animation velocity based on the determined page turning number. Since the touch is quickly released in the fast drag input, the time from the time point of touch release to the time point of completion of the page transition may increase. Conversely, since the touch is slowly released in the slow drag input, the time from the time point of touch release to the time point of completion of the page transition may decrease.

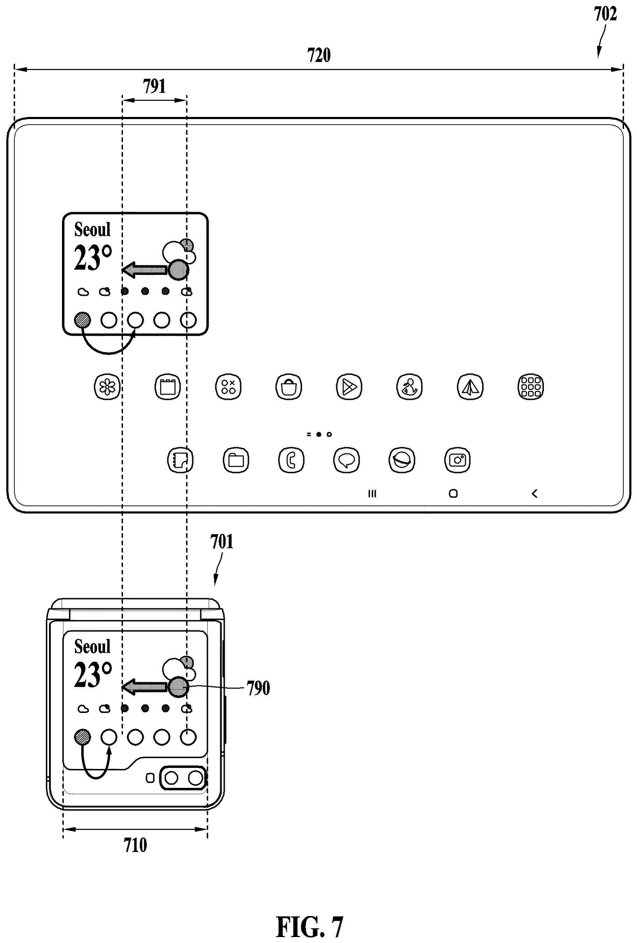

FIG. 7 illustrates turning a widget page according to a display size according to various embodiments.

For example, an electronic device 701 (e.g., the electronic device 201 of FIGS. 2A and 2B) may determine the page turning number further based on a length of a display (e.g., the cover display) in one direction in addition to a moving distance 791 of a pointing point 790, moving velocity, and a length of an object. The electronic device 701 may determine the page turning number based on Equation 2 below.

[Equation 2]

$$Page\ Turning\ Number = \frac{\{Swipe\ Distance - (Widget\ Size \times 0.5)\} + (\frac{Touch\ Velocity \times Offset \times Ratio}{Widget\ Size})}{Widget\ Size}$$

In Equation 2 described above, *Ratio= (WidgetSize/Screen Size)* may be a ratio (e.g., a widget size ratio) of a widget size to a screen size. The screen size may be the length (e.g., the width) in one direction of a screen area (or the display). The remaining variables are the same as described above in Equation 1. The electronic device 701 may obtain a corrected page turning number through Equation 2, which applies the widget size ratio to Equation 1. Depending on the screen size that displays the widget object, a gesture amount (e.g., the swipe velocity or the swipe distance) that the user may feel manipulation convenience may vary. The electronic device 701 may optimize the manipulation convenience of the user for each display size by displaying the target widget object using the corrected page turning number obtained by Equation 2 described above.

For example, a note PC device, a tablet device, a mobile device, and a watch device may have various display sizes. In FIG. 7, the electronic device 701 having a first screen length (e.g., a first scree width) and another electronic device 702 having a second screen length (e.g., a second screen width) are illustrated.

According to Equation 2 described above, the page turning number may depend on not only the size of the widget object but also the screen size. For example, when the screen area has a first screen length 710 (e.g., the width) in one direction, the electronic device 701 may turn the widget pages by a first page number (e.g., one page) with respect to a swipe amount (e.g., a moving distance 791). When the screen area has a second screen length 720 (e.g., the width) in the one direction, the electronic device 702 may turn the widget pages (e.g., two pages) by a second page number with respect to the same swipe amount (e.g., the moving distance 791). The first screen length 710 may be different from the second screen length 720, and the first page number may be different from the second page number. For example, as the screen size increases, more swipe amount (more moving distance) may be required to turn the same number of pages, and as the screen size decreases, less swipe amount (less moving distance) may be required to turn the same number of pages. In addition to the moving distance, the moving velocity required to turn the same number of pages may vary depending on the display size.

Accordingly, even if the electronic devices 701 and 702 have different screen sizes, the electronic devices 701 and 702 may provide operability optimized for each display size with respect to turning the widget pages.

In addition, the example is not limited thereto, and in the electronic device 701 having a flexible display (e.g., a foldable display or a rollable display), the number of pages turned with respect to the same gesture amount (e.g., the swipe distance) may vary depending on a change in the screen size. For example, in FIG. 7, an example in which a widget object is output on a cover display (e.g., the cover display 262 of FIGS. 2A and 2B) of the electronic device 701 is described, but the widget object may be output from a main display (e.g., the display 261 of FIGS. 2A and 2B). The electronic device 701 may output the widget object in a partial area (e.g., the widget area) of the main display. The electronic device 701 may turn the widget pages by the first page number with respect to the swipe amount in the cover display having a first screen size and may turn the widget pages by the second page number with respect to the same swipe amount in the main display having a second screen size. In another example, when the electronic device 701 includes a rollable display, the electronic device 701 may dynamically adjust the widget size ratio depending on the screen size (e.g., the screen width or the screen height) that is changed according to the expansion or contraction of the electronic device 701.

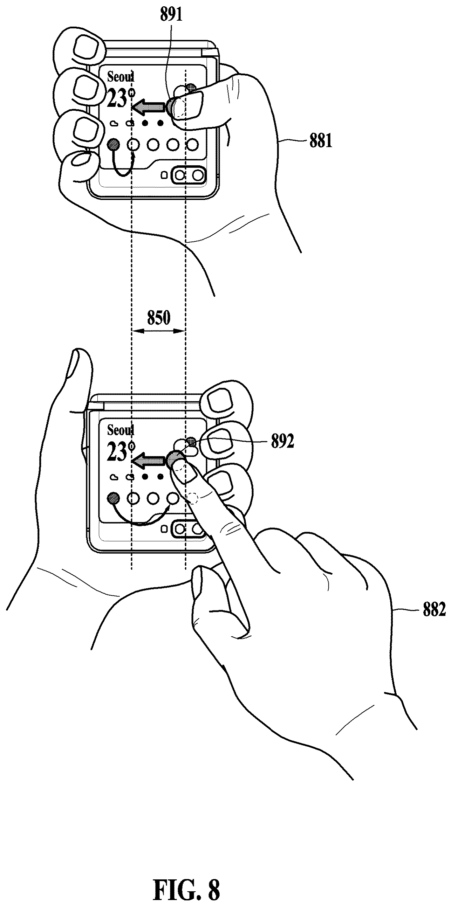

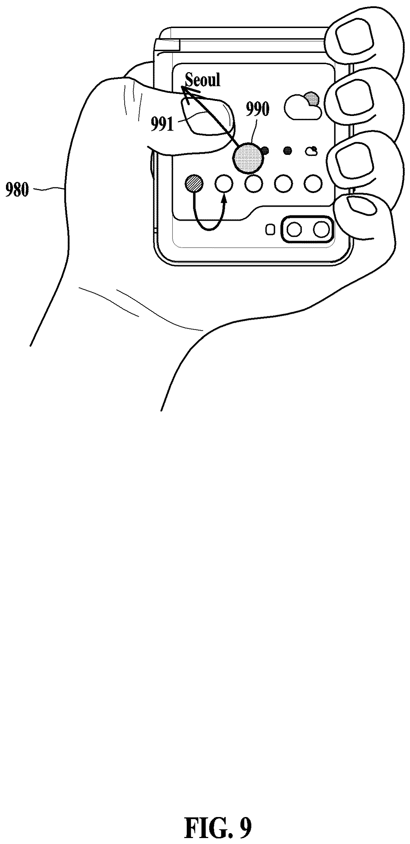

FIG. 8 illustrates turning a widget page according to a grip state according to various embodiments. FIG. 9 illustrates an example of determining whether a gesture is provided by a gripping hand according to various embodiments.

An electronic device (e.g., the electronic device 201 of FIGS. 2A and 2B) may adjust the offset weight of Equations (e.g., Equation 1 or Equation 2) described above for each grip state of a user. The grip state may include a one-handed manipulation state and a two-handed manipulation state. The one-handed manipulation state may be a state in which a gesture by a hand that is the same as a hand gripping the electronic device is detected. The two-handed manipulation state may be a state in which a gesture by a hand that is different from a hand gripping the electronic device is detected.

The electronic device may calculate a page turning number according to a first weight based on detecting a swipe input by a hand that is the same as a hand gripping the electronic device. The electronic device may calculate the page turning number according to a second weight based on detecting a swipe input by a hand that is different from the hand gripping the electronic device. For example, the second weight may be greater than the first weight. In other words, the electronic device may provide feedback (e.g., turning widget pages) by responding more sensitively to a gesture amount of the swipe input by the other hand than a gesture amount of the swipe input by the same hand gripping the electronic device.

For example, when the gripping hand is the same as the hand corresponding to a gesture input (e.g., the swipe input), the electronic device may turn widget pages by the first page turning number with respect to the gesture amount (e.g., the swipe distance and/or the swipe velocity). In another example, when the gripping hand is different from the hand corresponding to the gesture input, the electronic device may turn the widget pages by the second page turning number with respect to the same gesture amount. Since the second weight is greater than the first weight, referring to Equation 1 or 2, the second page number calculated with the second weight for the two-handed manipulation may be greater than the first page number for the one-handed manipulation. Since precise manipulation is difficult when manipulating the electronic device with one hand, the electronic device may turn the widget pages by responding insensitively to the one-handed manipulation. The first weight for the one-handed manipulation may have an appropriate value for turning one page. Conversely, since precise manipulation is possible when manipulating the electronic device with two hands, the electronic device may turn the widget pages by responding sensitively to the two-handed manipulation. The second weight for two-handed manipulation may have an appropriate value for turning two or more pages. Accordingly, the electronic device may correct a difference in gesture amounts caused by manipulation convenience of the user for each grip state, thereby preventing false manipulation in the one-handed manipulation and improving manipulation convenience in the two-handed manipulation.

In addition, the electronic device may increase the weight for one-handed manipulation according to settings. Depending on the user, dullness that may be felt in the one-handed manipulation may be alleviated.

According to various embodiments, the electronic device may determine whether the gripping hand and the hand corresponding to the swipe input are the same or different based on the swipe velocity or the swipe trajectory.

FIG. 8 describes determination based on the swipe velocity. For example, the electronic device may reduce the offset weight based on the gesture amount (e.g., the swipe distance and/or the swipe velocity) being less than a threshold (e.g., a threshold distance and/or threshold velocity). The electronic device may set the first weight that is set for the one-handed manipulation as the offset weight. This is because a hand motion of the user is limited in the one-handed manipulation, and thus, the swipe distance or the swipe velocity may be low. Accordingly, the electronic device may prevent false manipulation in the one-handed manipulation by adjusting the weight based on the gesture amount. Based on that moving velocity of a pointing point 891 is less than or equal to the threshold velocity by manipulation by a hand 881 that is the same as a gripping hand, the electronic device may determine a first page turning number (e.g., one page) with respect to a moving distance 850 using Equation 1 or 2. Based on that moving velocity of a pointing point 892 exceeds the threshold velocity by manipulation by a hand 882 that is different from the gripping hand, the electronic device may determine a second page turning number (e.g., three pages) with respect to the same moving distance 850.

FIG. 9 describes determination based on the swipe trajectory. For example, the electronic device may determine a grip state based on a moving trajectory 991 of a pointing point 990 during a swipe input. Based on that the moving trajectory 991 of the pointing point 990 is non-straight, straight, or arc-shaped, the electronic device may determine that the pointing point 990 is formed by a hand 980 gripping the electronic device. For example, based on that the moving trajectory 991 of the pointing point 990 matches a template trajectory (e.g., an arc-shaped trajectory) corresponding to one-handed manipulation, the electronic device may determine that a gripping hand 980 is the hand corresponding to a gesture input. Since each user has different physical properties (e.g., the thumb length), a shape (e.g., a diameter of the arc) of the template trajectory may be differently set. Based on that the moving trajectory 991 of the pointing point 990 matches the template trajectory corresponding to the one-handed manipulation, the electronic device may reduce (e.g., set as the first weight) the weight. Accordingly, the user may comfortably turn the widget pages by a natural motion of the thumb without being forced to make a linear motion.

However, the example is not limited thereto, and the electronic device may use a combination of the determination based on the swipe velocity and the determination based on the swipe trajectory described above with reference to FIGS. 8 and 9.

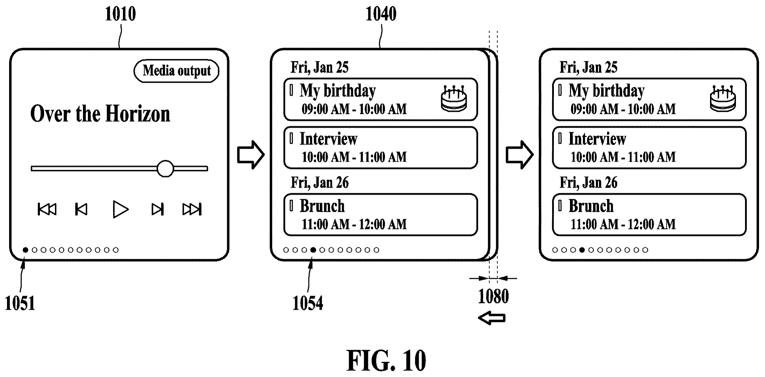

FIG. 10 illustrates page turning animation according to various embodiments.

An electronic device (e.g., the electronic device 201 of FIGS. 2A and 2B) may apply different feedback to each page turning number.

For example, when the page turning number is 1 or 0, the electronic device may fix an animation time (e.g., 500 ms) of a widget object. The animation time may be the length of time from a time point at which the movement of a current widget object is started (or a time point at which a pointing point is released) to a time point at which transition to a target widget object is completed.

In another example, when the page turning number is 2 or above, the electronic device may dynamically adjust the animation time based on the page turning number. The electronic device may determine the animation time by adding a default time length (e.g., 600 ms) to a product of a unit time length (e.g., 100 ms) and the page turning number.

In addition, based on that the page turning number exceeds 1, the electronic device may provide additional feedback when reaching the target widget object. For example, the electronic device may determine the page turning number (e.g., three pages) based on a swipe input while displaying a first widget object 1010. FIG. 10 illustrates an example of transitioning from the first widget object 1010 of a first index 1051 (e.g., 1) to a second widget object 1040 of a second index 1054 (e.g., 4) by turning pages. The electronic device may display the target widget object (e.g., the second widget object 1040) by sequentially moving and displaying widget objects of an arrangement sequence according to the page turning number. Based on that the target widget object moving in one direction (e.g., a direction from the first side to the second side) reaches (or contacts) the second side (e.g., the left side), the electronic device may temporarily reduce the target widget object. The electronic device may reduce an axial length (e.g., the horizontal length) of a target object. A reduced length 1080 may be determined based on at least one of the page turning number, a gesture amount (e.g., the swipe velocity and/or the swipe distance), or the moving velocity of the widget object. Consequentially, the electronic device may provide a bouncing effect as visual feedback by restoring the size of the target widget object that is temporarily reduced.

However, the example is not limited thereto, and the electronic device may provide haptic feedback based on that the target widget object reached by turning pages arrives at the second side. The electronic device may provide a determined number of vibrations, wherein the number is determined based on at least one of the page turning number, the gesture amount (e.g., the swipe velocity and/or the swipe distance), or the moving velocity of the widget object. For example, in the example illustrated in FIG. 10, since three pages are moved, the electronic device may provide haptic feedback that feels like three taps, "tap tap tap".

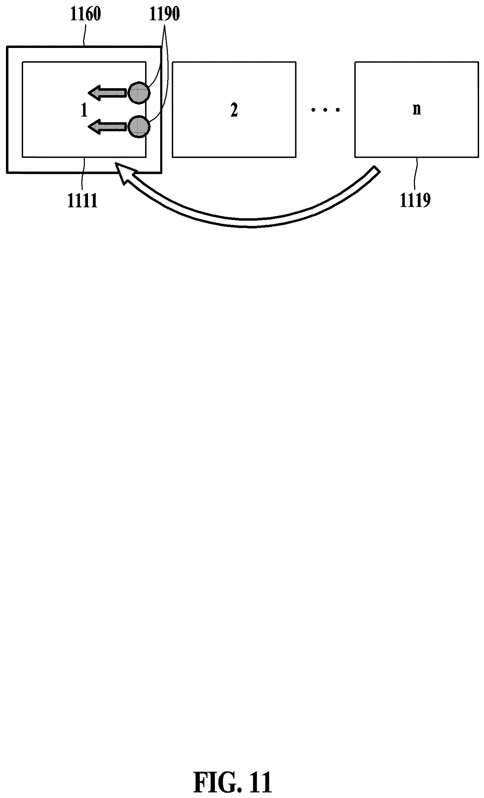

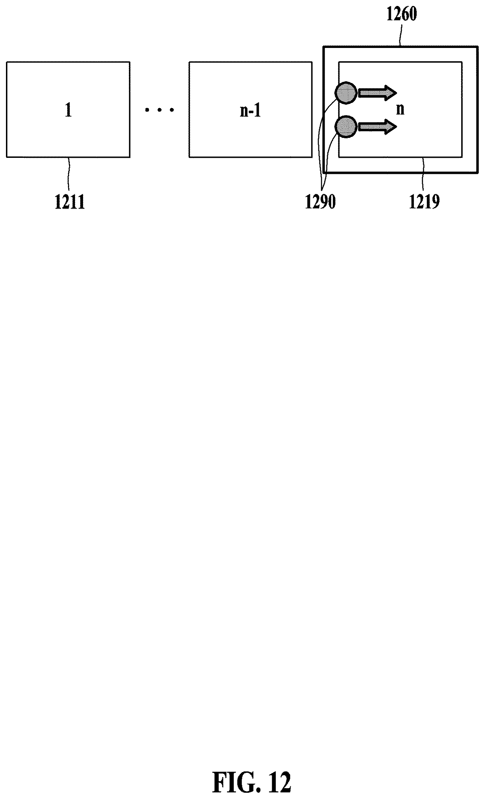

FIGS. 11 and 12 illustrate turning a widget page based on an additional gesture according to various embodiments.

An electronic device (e.g., the electronic device 201 of FIGS. 2A and 2B) may display a first or last widget page when a swipe input by two or more pointing points is detected. For example, the electronic device may detect a swipe input by a plurality of pointing points in a cover area (e.g., the cover area 262a of FIGS. 2A and 2B) other than a notch area of a display (e.g., the sub-display 262 of FIGS. 2A and 2B).

In the example illustrated in FIG. 11, the electronic device may display a last widget page 1119 on a screen area 1160 based on a swipe input 1190 of a plurality of pointing points (e.g., a touch by two fingers) from a first side (e.g., the right side) to a second side (e.g., the left side). Although the example of detecting the swipe input 1190 while displaying a first widget object 1111 is illustrated in FIG. 11, the example is not limited thereto. When the electronic device detects the swipe input 1190 in a widget object corresponding to an arbitrary index in the arrangement sequence, the electronic device may output the last widget object 1119. The electronic device may sequentially output widget objects from a current widget object to the last widget object 1119, but the example is not limited thereto, and the electronic device may skip the widget objects at once and may display the last widget object 1119.

In the example illustrated in FIG. 12, the electronic device may display a first widget page 1211 on a screen area 1260 based on a swipe input 1290 of a plurality of pointing points from a second side (e.g., the left side) to a first side (e.g., the right side). Although the example of detecting the swipe input 1290 while displaying a last widget object 1219 is illustrated in FIG. 12, the example is not limited thereto. When the electronic device detects the swipe input 1290 in a widget object corresponding to an arbitrary index in the arrangement sequence, the electronic device may output the first widget object 1211. The electronic device may sequentially output widget objects from a current widget object to the last widget object 1211, but the example is not limited thereto, and the electronic device may skip the widget objects at once and may display the last widget object 1211.

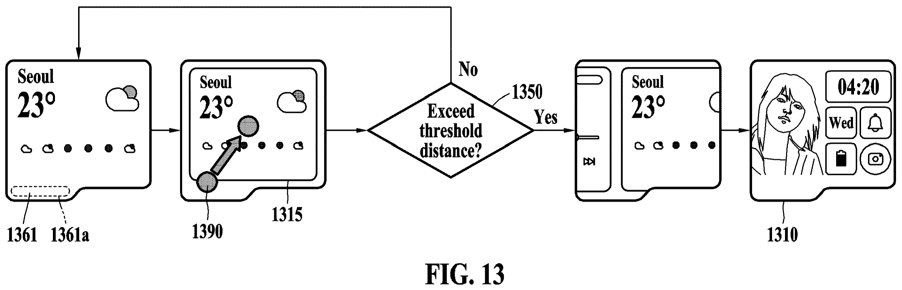

FIGS. 13 to 16 illustrate operations based on a gesture input in a notch area according to various embodiments.

A cover display (e.g., the cover display 262 of FIGS. 2A and 2B) of an electronic device (e.g., the electronic device 201 of FIGS. 2A and 2B) may include a cover area (e.g., the cover area 262a of FIGS. 2A and 2B) in which a widget object is displayed, and a notch area (e.g., the notch area 262b of FIGS. 2A and 2B) having a shape protruding from an edge of the cover area. When detecting a swipe input in the notch area, the electronic device may perform one of transition display to a default page, transition display to a notification page, or transition display to a device function page.

FIG. 13 describes an example of transition display to the default page based on a gesture input in the notch area.

The electronic device (e.g., the electronic device 201 of FIGS. 2A and 2B) may detect a swipe input (e.g., a swipe-up input or notch swipe-up) in one direction (e.g., a direction from bottom to top) in the notch area. The electronic device may provide visual feedback that reduces a size of a current widget object 1315 based on a swipe distance during the swipe-up input. The electronic device may determine that the swipe-up input is initiated based on the formation and departure of a pointing point from an edge 1361a of a notch area 1361. The swipe input may be terminated when the pointing point is released.

The electronic device may determine whether the swipe distance exceeds a threshold distance (e.g., 30 density-independent pixel (DP)) based on a time point at which a pointing point 1390 is released. The electronic device may restore the size of the current widget object 1315 based on the swipe distance being less than or equal to the threshold distance. The electronic device may restore a screen corresponding to a depth (e.g., a second depth) before the swipe input is detected. The depth corresponding to a screen of an application may correspond to an input count required to access the screen. For example, a first screen of the application may have a depth of 0, and when transitioning to a second screen from the first screen by an arbitrary input, the second screen may correspond to a depth of 1. When transitioning from the second screen to a third screen by an additional input, the third screen may correspond to a depth of 2. When restoring the screen described above, the electronic device may restore a screen of the depth that is previously provided.

In addition, at a time point when the swipe distance exceeds the threshold distance, the electronic device may provide feedback (e.g., at least one of acoustic feedback or haptic feedback). Accordingly, the electronic device may intuitively guide the user as to whether a distance required to move to the default page has been reached.

The electronic device may perform transition to the default page based on the swipe distance exceeding the threshold distance. The default page may be, for example, a page in which a cover home widget 1310 is disposed and may correspond to an index of 0 in the arrangement sequence. Sequentially from the current widget object 1315 to the cover home widget 1310, the electronic device may change the display of the widget objects by gradually appearing the widget objects from a first side (e.g., the left side), moving the widget objects from the first side to a second side (e.g., the right side), and moving the widget objects toward the outside of the screen area on the second side. The electronic device may provide visual feedback to rapidly scroll from the current widget object 1315 to the cover home widget 1310.

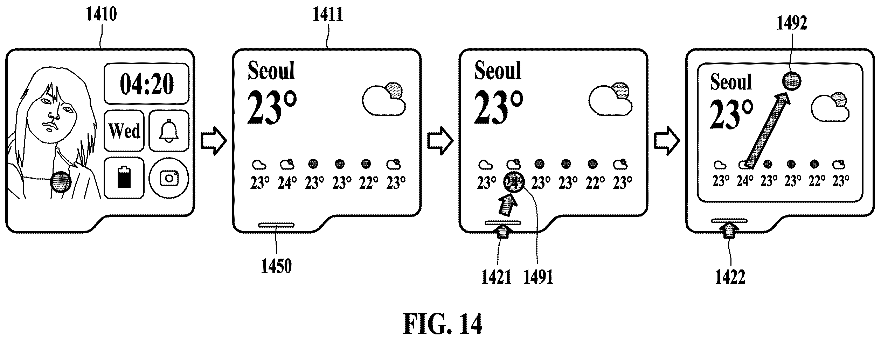

FIG. 14 illustrates a handler object in swipe-up according to various embodiments.

An electronic device (e.g., the electronic device 201 of FIGS. 2A and 2B) may output a handler object together with a widget object. When a gesture hint mode is set by a user, the electronic device may output the handler object. The gesture hint mode may be, for example, a mode that displays a visual object (e.g., affordance or a handler object) to guide a direction of a gesture.

The electronic device may overlay and display a handler object 1450 on a widget object 1411 based on transition from the cover home widget 1410 to the widget object 1411 by turning pages. The electronic device may output the handler object 1450 in a notch area of a cover display (e.g., the cover display 262 of FIGS. 2A and 2B). The electronic device may dispose the handler object 1450 on an edge or at a position adjacent to the edge of the notch area. Accordingly, the electronic device may guide the user about a position at which a pointing point for swipe-up needs to be formed.

Based on the formation and movement of a pointing point 1491 in an area corresponding to the handler object 1450, the electronic device may determine that a swipe-up input is initiated. The electronic device may move the handler object 1450 in a direction 1421 (e.g., a direction from bottom to top) based on the swipe-up input being initiated in the notch area. Based on that a pointing point 1492 continuously moves, the electronic device may also move the handler object 1450 in a direction 1422 according to displacement of the pointing point 1492. Accordingly, the handler object 1450 may be visualized as the handler object 1450 is pulled in the directions 1421 and 1422 by the pointing points 1491 and 1492. Since the handler object 1450 is displayed on an area where a finger passes, the electronic device may provide intuitive visibility with respect to a distance of the swipe-up input through the movement of the handler object 1450.

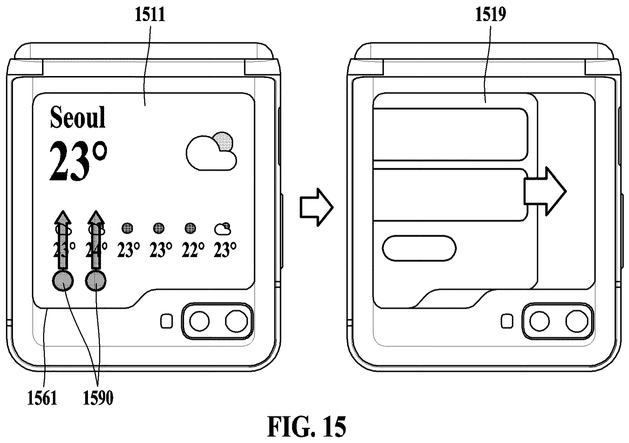

FIG. 15 illustrates an example of displaying a notification page according to an additional gesture in a notch area according to various embodiments.

An electronic device (e.g., the electronic device 201 of FIGS. 2A and 2B) may perform transition display to a notification page based on detecting movements of two or more pointing points 1590 in a first direction (e.g., a direction from bottom to top) in a notch area 1561. Based on the two or more pointing points 1590 moving in the first direction, the electronic device may perform transition display from a current widget object 1511 to an object 1519 of the notification page. The electronic device may sequentially transition the display from a widget object of an arbitrary index in an arrangement sequent to the object 1519 of the notification page. For example, since an index of the notification page corresponds to -1, the electronic device may provide visual feedback that rapidly scrolls objects in the arrangement sequence from the current widget object 1511 to the object 1519 of the notification page.

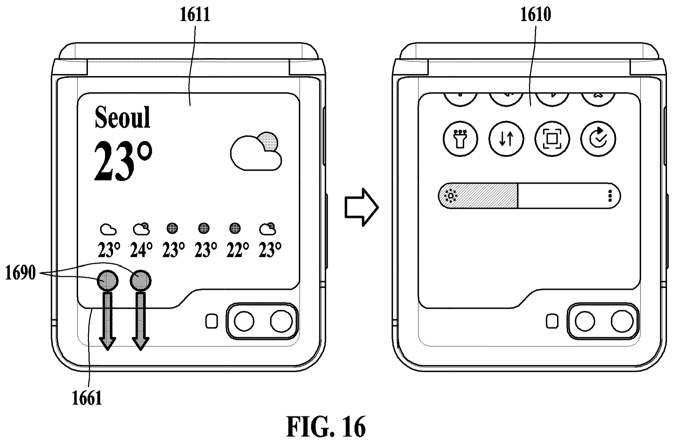

FIG. 16 illustrates an example of displaying a device function page according to an additional gesture in a notch area according to various embodiments.

An electronic device (e.g., the electronic device 201 of FIGS. 2A and 2B) may perform transition display to a device function page (e.g., a quick panel) based on detecting movements of two or more pointing points 1690 in a second direction (e.g., a direction from top to bottom) in a notch area 1661. Based on the two or more pointing points 1690 moving in the second direction, the electronic device may perform transition display from a current widget object 1611 to an object 1610 of a notification page. As the object 1610 of the device function page descends in the second direction, the electronic device may display the current widget object 1611 such that the object 1610 overlays on the current widget object 1611.

For reference, the gestures assigned to the operations described above may vary depending on settings. A gesture assigned to an operation may not overlap with gestures assigned to the other operations. For example, based on allocating notch swipe-up to transition to another object (e.g., a payment function object), the electronic device may cancel allocation of notch swipe-up to other operations (e.g., transition to the default page).

**Claims**

1. An electronic device 101, 201 comprising:

   a cover display 262 configured for outputting a widget object;
   a main display 261;
   a memory storing computer-executable instructions; and
   one or more processors accessing the memory and executing the instructions,
   wherein the instructions, when executed by the one or more processors, cause the electronic device 101, 201 to:

   move the widget object based on a movement of a pointing point formed on the cover display 262,
   determine a page turning number based on a moving distance of the pointing point at a time point when the pointing point is moved and then is released, a moving velocity of the pointing point, and a length of the widget object in one direction, and
   output a widget object of a target widget page by sequentially turning widget pages by the determined page turning number subsequently to the release of the pointing point.

2. The electronic device 101, 201 of claim 1,
   wherein the length of the widget object in the one direction is a height or a width of the widget object.

3. The electronic device 101, 201 according to any one of claims 1 to 2, wherein the instructions, when executed by the one or more processors, further cause the electronic device 101, 201 to:

   detect a swipe input in which the pointing point is moved and then is released,
   when the widget object has a first length in the one direction, turn a widget page by a first page number with respect to a swipe amount of the swipe input, and
   when the widget object has a second length in the one direction, turn a widget page by a second page number with respect to the swipe amount, wherein the first length is different from the second length, and the first page number is different from the second page number, and
   the swipe amount includes at least one of a swipe velocity or a swipe distance of the swipe input.

4. The electronic device 101, 201 according to any one of claims 1 to 3, wherein the instructions, when executed by the one or more processors, further cause the electronic device 101, 201 to:
   when detecting an input set of temporally adjacent swipe inputs, adjust a weight for calculating the page turning number.

5. The electronic device 101, 201 according to any one of claims 1 to 4, wherein the instructions, when executed by the one or more processors, further cause the electronic device 101, 201 to:
   based on receiving an additional swipe input while sequentially turning a plurality of widget pages, adjust a weight for calculating the page turning number.

6. The electronic device 101, 201 according to any one of claims 1 to 5, wherein the instructions, when executed by the one or more processors, further cause the electronic device 101, 201 to:

   move a widget page by a first page turning number based on a swipe input of a swipe amount, and
   after an input set of temporally adjacent swipe inputs is detected a predetermined number of times or more for widget page turning, turn a widget page by a second page turning number that is different from the first page turning number with respect to the swipe input of the swipe amount.

7. The electronic device 101, 201 according to any one of claims 1 to 6, wherein the instructions, when executed by the one or more processors, further cause the electronic device 101, 201 to:
   determine the page turning number further based on a length of the cover display 262 in the one direction.

8. The electronic device 101, 201 according to any one of claims 1 to 7, wherein the instructions, when executed by the one or more processors, further cause the electronic device 101, 201 to:

calculate the page turning number according to a first weight based on detecting a swipe input by a hand that is the same as a hand gripping the electronic device 101, 201, and
calculate the page turning number according to a second weight based on detecting a swipe input by a hand that is different from the hand gripping the electronic device 101, 201.

9. The electronic device 101, 201 according to any one of claims 1 to 8, wherein the instructions, when executed by the one or more processors, further cause the electronic device 101, 201 to:
determine whether a gripping hand is the same as or different from a hand corresponding to a swipe input based on a swipe velocity or a swipe trajectory.

10. The electronic device 101, 201 according to any one of claims 1 to 9,

wherein the cover display 262 further comprises, in addition to a cover area in which the widget object is displayed, a notch area having a shape protruding from an edge of the cover area, and
the instructions, when executed by the one or more processors, further cause the electronic device 101, 201 to:
when detecting a swipe input in the notch area, perform one of transition display to a default page, transition display to a notification page, or transition display to a device function page.

11. A method implemented by a processor, the method comprising:

outputting a widget object via a cover display 262 of an electronic device 101, 201;
moving the widget object based on a movement of a pointing point formed on the cover display 262;
determining a page turning number based on a moving distance of the pointing point at a time point when the pointing point is moved and then is released, a moving velocity of the pointing point, and a length of the widget object in one direction; and
outputting a widget object of a target widget page by sequentially turning widget pages by the determined page turning number subsequently to the release of the pointing point.

12. The method of claim 11,
wherein the length of the widget object in the one direction is a height or a width of the widget object.

13. The method according to any one of claims 11 to 12, further comprising:

detecting a swipe input in which the pointing point is moved and then is released,
wherein the outputting of the widget object comprises:

when the widget object has a first length in the one direction, turning a widget page by a first page number with respect to a swipe amount of the swipe input, and
when the widget object has a second length in the one direction, turning a widget page by a second page number with respect to the swipe amount, wherein the first length is different from the second length, and the first page number is different from the second page number, and
the swipe amount includes at least one of a swipe velocity or a swipe distance of the swipe input.

14. The method according to any one of claims 11 to 13,
wherein the determining of the page turning number comprises, when detecting an input set of temporally adjacent swipe inputs, adjusting a weight for calculating the page turning number.

15. The method according to any one of claims 11 to 14,
wherein the determining of the page turning number comprises, based on receiving an additional swipe input while sequentially turning a plurality of widget pages, adjusting a weight for calculating the page turning number.

**FIG. 1**

EP 4 726 517 A1

**FIG. 2A**

FIG. 2B

310a

320a

City name

23°

Weather
App

23° 24° 23° 23° 23° 23°

## FIG. 3A

**FIG. 3B**

311c

APP
A

320c

App A
Content

312c

App B
Content

APP
B

FIG. 3C

311d

APP
A

App A

312d

APP
B

App B

App A
Content

320d

## FIG. 3D

**FIG. 4**

```
                    ┌─────────────────┐
                    │      Start      │
                    └─────────────────┘
                             │
                             ▼                              ╱ 510
┌──────────────────────────────────────────────────────────────┐
│   Move widget object as pointing point formed on cover display moves │
└──────────────────────────────────────────────────────────────┘
                             │
                             ▼                              ╱ 520
┌──────────────────────────────────────────────────────────────┐
│         Determine page turning number based on moving distance of      │
│           pointing point, moving velocity of pointing point, and       │
│   length in one direction of cover display at time point when pointing point is │
│                    moved and then is released                          │
└──────────────────────────────────────────────────────────────┘
                             │
                             ▼                              ╱ 530
┌──────────────────────────────────────────────────────────────┐
│            Output a widget object of the target widget page by         │
│  sequentially turning widget pages by the page turning number determined │
│           subsequently to the release of the pointing point            │
└──────────────────────────────────────────────────────────────┘
                             │
                             ▼
                    ┌─────────────────┐
                    │       End       │
                    └─────────────────┘
```

FIG. 5

FIG. 6A

EP 4 726 517 A1

Start touch
T0

Start page
transition
T1

Release
touch

T2

Page transition
effect 1
T3

Page transition
effect 2
T4

Complete page
transition
T5

t(Time)

620   610

630   620

620   622

620   622

622

<fast>

621

Fri, Jan 25

My birthday
09:00 AM - 10:00 AM

Interview
10:00 AM - 11:00 AM

Fri, Jan 26

Brunch
11:00 AM - 12:00 AM

04:20
Wed

Over the

Touch drag speed
detection area

W1

Fri, Jan 25

My birthday
09:00 AM - 10:00 AM

Interview
10:00 AM - 11:00 AM

Fri, Jan 26

Brunch
11:00 AM - 12:00 AM

Fri, Jan 25

My birthday
09:00 AM - 10:00 AM

Interview
10:00 AM - 11:00 AM

Fri, Jan 26

Brunch
11:00 AM - 12:00 AM

R

Start touch
T0

T1

Start page
transition
T2

Release
touch

Complete page
transition
T5

t(Time)

620   650

670   620

621

<slow>

04:20
Wed

Over the

621

Over the Horizon

Touch drag speed
detection area

W2

FIG. 6B

EP 4 726 517 A1

**FIG. 7**

**FIG. 8**

**FIG. 9**

**FIG. 10**

**FIG. 11**

**FIG. 12**

FIG. 13

FIG. 14

EP 4 726 517 A1

1511

1519

Seoul
23°

23° 24° 23° 23° 22° 23°

1561  1590

FIG. 15

1611     1610

Seoul
23°

23° 24° 23° 23° 22° 23°

1690

1661

**FIG. 16**

# EP 4 726 517 A1

## INTERNATIONAL SEARCH REPORT

| | International application No. |
|---|---|
| | **PCT/KR2024/007314** |

### A. CLASSIFICATION OF SUBJECT MATTER

**G06F 3/04842**(2022.01)i; **G06F 3/04817**(2022.01)i; **G06F 3/041**(2006.01)i; **G06F 3/0488**(2013.01)i

According to International Patent Classification (IPC) or to both national classification and IPC

### B. FIELDS SEARCHED

Minimum documentation searched (classification system followed by classification symbols)

G06F 3/04842(2022.01); G06F 3/01(2006.01); G06F 3/041(2006.01); G06F 3/0481(2013.01); G06F 3/0483(2013.01); G06F 3/0484(2013.01); G06F 3/0485(2013.01); H04B 1/40(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 위젯 오브젝트(widget object), 커버 디스플레이(cover display), 포인팅 (pointing), 페이지 넘김 개수(page turning number), 이동 거리(movement distance), 이동 속도(movement velocity), 길이 (length)

### C. DOCUMENTS CONSIDERED TO BE RELEVANT

| Category* | Citation of document, with indication, where appropriate, of the relevant passages | Relevant to claim No. |
|---|---|---|
| Y | KR 10-2020-0133945 A (SAMSUNG ELECTRONICS CO., LTD.) 01 December 2020 (2020-12-01) See paragraphs [0048]-[0049], [0058], [0062], [0070], [0100] and [0104]; claims 1 and 7; and figures 3-5f. | 1-7,11-15 |
| A | | 8-10 |
| Y | KR 10-2023-0065843 A (SAMSUNG ELECTRONICS CO., LTD.) 12 May 2023 (2023-05-12) See paragraph [0042]; claim 2; and figure 9. | 1-7,11-15 |
| A | KR 10-2013-0081838 A (LG ELECTRONICS INC.) 18 July 2013 (2013-07-18) See claim 4. | 1-15 |
| A | KR 10-2012-0073223 A (AMAZON TECHNOLOGIES, INC.) 04 July 2012 (2012-07-04) See paragraphs [0028]-[0056]; claims 5-7; and figures 4-10. | 1-15 |

☑ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **29 August 2024** | **29 August 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/007314**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2015-0025635 A (SAMSUNG ELECTRONICS CO., LTD.) 11 March 2015 (2015-03-11) See paragraphs [0094]-[0156]; and figures 3a-13b. | 1-15 |

Form PCT/ISA/210 (second sheet) (July 2022)

## INTERNATIONAL SEARCH REPORT
### Information on patent family members

International application No.

**PCT/KR2024/007314**

| Patent document cited in search report | | | Publication date (day/month/year) | Patent family member(s) | | | Publication date (day/month/year) |
|---|---|---|---|---|---|---|---|
| KR | 10-2020-0133945 | A | 01 December 2020 | WO | 2020-235763 | A1 | 26 November 2020 |
| KR | 10-2023-0065843 | A | 12 May 2023 | None | | | |
| KR | 10-2013-0081838 | A | 18 July 2013 | EP | 2615535 | A1 | 17 July 2013 |
| | | | | EP | 2615535 | B1 | 27 December 2017 |
| | | | | KR | 10-1710547 | B1 | 27 February 2017 |
| | | | | US | 2013-0176298 | A1 | 11 July 2013 |
| | | | | US | 9417781 | B2 | 16 August 2016 |
| KR | 10-2012-0073223 | A | 04 July 2012 | CA | 2771709 | A1 | 10 March 2011 |
| | | | | CN | 102576251 | A | 11 July 2012 |
| | | | | CN | 102576251 | B | 02 September 2015 |
| | | | | EP | 2473897 | A1 | 11 July 2012 |
| | | | | EP | 2473897 | A4 | 23 January 2013 |
| | | | | JP | 2013-504128 | A | 04 February 2013 |
| | | | | JP | 5709871 | B2 | 30 April 2015 |
| | | | | KR | 10-1675178 | B1 | 10 November 2016 |
| | | | | WO | 2011-028944 | A1 | 10 March 2011 |
| KR | 10-2015-0025635 | A | 11 March 2015 | US | 2015-0062027 | A1 | 05 March 2015 |

Form PCT/ISA/210 (patent family annex) (July 2022)